# EUROPEAN PATENT SPECIFICATION

(11) **EP 2 822 853 B1**
(45) Date of publication and mention of the grant of the patent: **11.09.2019**
(21) Application number: 12710404.0
(22) Date of filing: 08.03.2012
(51) Int. Cl.: B64C 25/12

(54) **FUSELAGE MOUNTED LANDING GEAR**
RUMPFMONTIERTES FAHRWERK
TRAIN D'ATTERRISSAGE MONTÉ DANS UN FUSELAGE

(43) Date of publication of application: 14.01.2015
(73) Proprietor: The Boeing Company, Chicago, IL 60606-1596 (US)
(72) Inventor: SALMON, James Jason, Kirkland, Washington 98034 (US); BARMICHEV, Sergey D., Bothell, Washington 98011 (US); LONG, Michael Allan, Freeland, Washington 98249 (US)
(74) Representative: Boult Wade Tennant LLP
(86) International application number: PCT/US2012/028314
(87) International publication number: WO 2013/133839

(56) References cited:
- EP-A2- 1 041 000
- DE-A1- 2 924 742
- FR-A1- 2 800 705
- US-A- 5 086 995

## Description

### BACKGROUND INFORMATION

### 1. Field:

The present disclosure relates generally to aircraft, and more particularly, to landing gear for aircraft. Still more particularly, the present disclosure relates to a fuselage mounted landing gear for aircraft and to a method for retracting a fuselage mounted landing gear.

### 2. Background:

An effective landing gear design for an aircraft should provide an optimum combination of sufficient overall functional strength, a geometric arrangement for adequate ground maneuvering and landing stability, a lowest possible weight, and a lowest possible drag when retracted. On any high wing or other aircraft in which the main landing gear is not easily stored or cannot be attached to a wing of the aircraft, at least one of the above goals may be at risk. In the case of fuselage mounted landing gear configurations, for example, the low drag goal may be compromised.

An aircraft's main landing gear must be placed sufficiently outboard of the side of the body of the aircraft to enhance stability and prevent wallowing during ground maneuvers. On low wing aircraft this is usually not a problem because a gear post can be attached to the wing, outboard of the side of the body of the aircraft. When the gear is extended, the gear must be far enough out to ensure stability. On an aircraft that cannot use wing mounted landing gear, the landing gear typically must be mounted to and completely stored within the body of the aircraft.

Fuselage mounted landing gear (FMLG) designs may be heavy and cause significant drag. Typically, in order for the landing gear to be sufficiently outboard, the body frame of the landing gear is extended beyond the side of the body of the aircraft. The top of gear struts are attached to trunnions mounted to these frames. The gear assembly pivots around these trunnions and is stowed inside the body.

In order to minimize the drag associated with the increase in frontal area, a fairing is wrapped around the external structure, driving additional structural weight. Despite streamlining efforts, total drag is still dependent upon frontal area and surface area, both of which are increased by the fairings.

Large fairings increase aircraft wetted area and frontal area, and, accordingly, the parasite drag grows, which may effect the efficiency of the aircraft. Moreover, for middle wing configurations, the main landing gear fairing may become close to the lower wing surface, which may create additional interference drag.

Another feature which is typical for most current FMLG designs is that the retracted landing gear occupies bays between fuselage frames to adequately accommodate a big wheel truck. This has an effect on available internal fuselage volume, which could otherwise be used for other systems or for additional cargo space.

EP-A2-1041000 describes a retractable landing gear assembly for an airplane. The airplane includes a fuselage defining an outer mold line. The landing gear assembly includes an elongate link for reciprocating the landing gear assembly between an extended position for taxiing and landing of the airplane, and a retracted position to stow the landing gear assembly within the outer mold line of the fuselage to minimize aerodynamic drag. The link includes a first end pivotably attached to the airplane and a longitudinally spaced second end. The link first end being a first pivot point and the link second end being a second pivot point. The landing gear assembly also includes an elongate strut assembly having longitudinally spaced first and second ends. The first end being attached to the link second end for swinging movement of the strut assembly between the extended and retracted positions. At least two wheels are journaled to the strut's second end. The landing gear assembly also includes an actuator extending between the airplane and the landing gear assembly for selective actuation of the landing gear assembly between the extended and retracted positions by pivoting the strut assembly about the first and second pivot points.

DE-A1-2924742 is related to US-A-4,638,962, which describes (a) a plurality of rows of landing gear units mounted along the aircraft fuselage and spread across a range extending predominantly in the longitudinal aircraft direction, the units forming the main landing gear, (b) the landing gear units being of the same design and identical dimensions, and (c) a device for switching-on the lift generating device at predetermined lift conditions together with setting and maintaining a longitudinal attitude of the aircraft or of its landing gear parallel to the taxiway and runway, whereby the take-off phase or the landing phase is performed using the method of direct lift control.

US-A-5,086,995 describes a retractable wing-mounted landing gear for a heavy airplane with an aft center of gravity including a trunnion, an aftly-cantilevered strut member, a ground-contacting wheel assembly, and a folding drag brace. The trunnion is operably mounted to the wing for pivotal movement about a substantially forward and aft axis of rotation. The trunnion is rotatable to cause substantially lateral movement of the gear between in-use and stowed positions. The strut member has upper and lower ends, the upper end being pivotally connected to the trunnion for relative forward and aft movement thereto. The pivotal connection has an axis of rotation substantially perpendicular to that of the trunnion. The ground-contacting wheel assembly is operably connected to the lower end of the strut member. The folding drag brace extends between the lower end of the strut member and a location on the aircraft spaced forwardly from the strut member. The folding drag brace is movable between an in-use stabilizing position and a stowed position in which the drag brace folds to permit relative forward and aft movement of the strut member. The strut member is cantilevered aftly relative to the trunnion when the gear is in the in-use position. The strut member pivots relatively forwardly for lateral, inboard retraction of the gear to the stowed position. The gear may also include a linkage between the wheel assembly and strut member to transfer the substantially vertical load placed on the wheel assembly to the aftly angled, linearly-reciprocating, shock-absorbing portion of the strut member.

Therefore, it would be advantageous to have a landing gear for an aircraft that takes into account one or more of the issues discussed above, as well as possibly other issues.

### SUMMARY

In accordance with one aspect, there is provided a landing gear for an aircraft as set out in claim 1. In accordance with another aspect, there is provided a method for retracting a wheel truck assembly of an aircraft from a deployed position to a retracted position as set out in claim 5.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** is an illustration of an aircraft manufacturing and service method in accordance with an advantageous embodiment;
**Figure 2** is an illustration of an aircraft in which an advantageous embodiment may be implemented;
**Figure 3** is an illustration of a landing gear for an aircraft in accordance with an advantageous embodiment;
**Figure 4** is an illustration of a rear plan view of a landing gear for an aircraft in accordance with an advantageous embodiment;
**Figure 5** is an illustration of a side plan view of the landing gear of **Figure 4** looking outwardly from the aircraft;
**Figure 6** is an illustration of a side plan view of the landing gear of **Figure 4** looking inwardly toward the aircraft;
**Figures 7** and **8** are illustrations of a rear plan view of the landing gear of **Figures 4-6** in first and second stages, respectively, of being retracted; in accordance with an advantageous embodiment;
**Figure 9** is an illustration of a rear plan view of the landing gear of **Figures 4-6** in a fully retracted position in accordance with an advantageous embodiment;
**Figure 10** is an illustration of a rear plan view of a landing gear fairing decrement for a wider fuselage aircraft than the aircraft in **Figure 9** in accordance with a further advantageous embodiment;
**Figures 11** and **12** are illustrations that depict details of the landing gear backup structure of **Figure 4** in accordance with an advantageous embodiment;
**Figure 13** and **14** are illustrations that depict isometric views of the landing gear **of** **Figures 4-6** integrated into a fuselage structure of an aircraft in accordance with an advantageous embodiment;
**Figure 15** is an illustration of a top plan view of the landing gear of **Figures 4-6****,** showing the landing gear in both deployed and retracted positions in accordance with an advantageous embodiment;
**Figure 16** is an illustration of a rear perspective view of a landing gear with an alternative actuation scheme for an aircraft in accordance with a further advantageous embodiment;
**Figure 17** is an illustration of a rear plan view of a landing gear with a further alternative actuation scheme for an aircraft in accordance with a further advantageous embodiment;
**Figures 18** and **19** are illustrations that depict a two axle truck landing gear for an aircraft in accordance with a further advantageous embodiment; and
**Figure 20** is an illustration of a side perspective view of a landing gear for an aircraft in accordance with a further advantageous embodiment.

### DETAILED DESCRIPTION

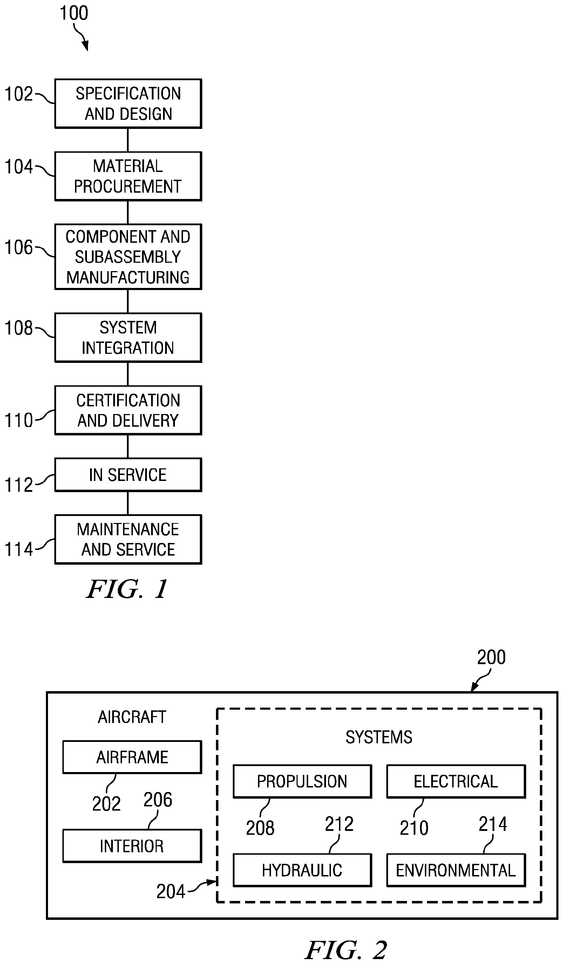

Referring more particularly to the drawings, embodiments of the disclosure may be described in the context of aircraft manufacturing and service method **100** as shown in **Figure 1** and aircraft **200** as shown in **Figure 2****.** Turning first to **Figure 1****,** an illustration of an aircraft manufacturing and service method is depicted in accordance with an advantageous embodiment. During pre-production, aircraft manufacturing and service method **100** may include specification and design **102** of aircraft **200** in **Figure 2** and material procurement **104.**

During production, component and subassembly manufacturing **106** and system integration **108** of aircraft **200** in **Figure 2** takes place. Thereafter, aircraft **200** in **Figure 2** may go through certification and delivery **110** in order to be placed in service **112.** While in service by a customer, aircraft **200** in **Figure 2** is scheduled for routine maintenance and service **114,** which may include modification, reconfiguration, refurbishment, and other maintenance or service.

Each of the processes of aircraft manufacturing and service method 100 may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of venders, subcontractors, and suppliers; and an operator may be an airline, leasing company, military entity, service organization, and so on.

With reference now to **Figure 2****,** an illustration of an aircraft is depicted in which an advantageous embodiment may be implemented. In this example, aircraft **200** is produced by aircraft manufacturing and service method **100** in **Figure 1** and may include airframe **202** with a plurality of systems **204** and interior **206.** Examples of systems **204** include one or more of propulsion system **208,** electrical system **210,** hydraulic system **212,** and environmental system **214.** Any number of other systems may be included. Although an aerospace example is shown, different advantageous embodiments may be applied to other industries, such as the automotive industry.

Apparatus and methods embodied herein may be employed during at least one of the stages of aircraft manufacturing and service method **100** in **Figure 1****.** As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C or item B and item C.

As one illustrative example, components or subassemblies produced in component and subassembly manufacturing **106** in **Figure 1** may be fabricated or manufactured in a manner similar to components or subassemblies produced while aircraft **200** is in service **112** in **Figure 1****.** As yet another example, a number of apparatus embodiments, method embodiments, or a combination thereof may be utilized during production stages, such as component and subassembly manufacturing **106** and system integration **108** in **Figure 1****.**

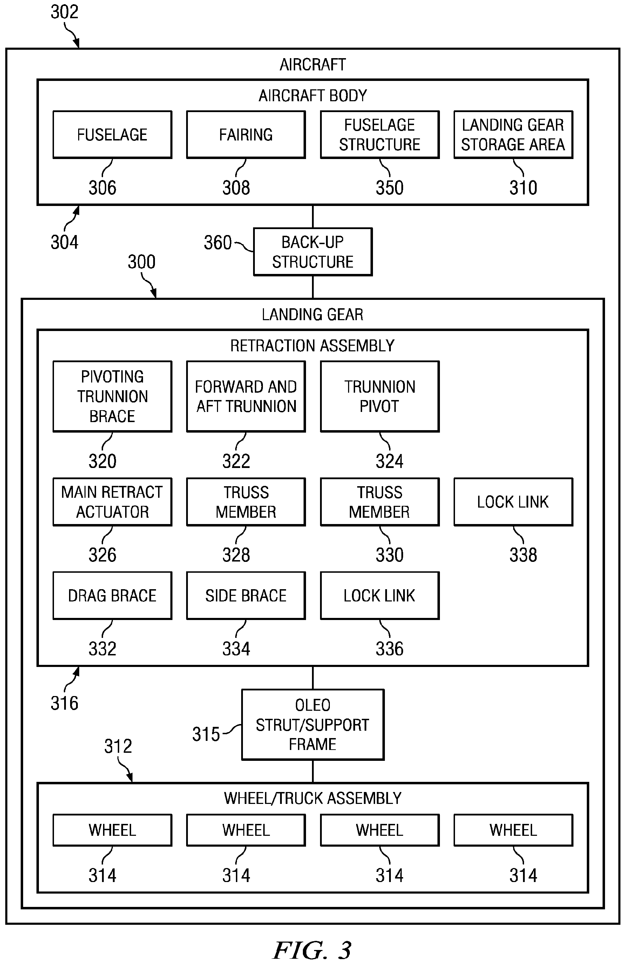

With reference now to **Figure 3****,** an illustration of a landing gear for an aircraft is depicted in accordance with an advantageous embodiment. The landing gear is generally designated by reference number **300,** and is a fuselage mounted landing gear (FMLG) that is mounted to and stored within an aircraft body **304** of an aircraft **302.** Aircraft **302** may, for example, be implemented as aircraft **200** in **Figure 2****.** Aircraft body **304** may be fuselage **306** alone, or aircraft body **304** may be fuselage **306** expanded somewhat by fairing **308** to define a
landing gear storage area **310** for storing landing gear **300** when the landing gear **300** is in a stowed position.

Landing gear **300** may be one of a plurality of landing gear mounted to aircraft **302,** and is moveable between a deployed position while on the ground and during take-off and landing, and a retracted position when stored in landing gear storage area **310** during flight.

Landing gear **300** has a wheel/truck assembly **312,** a retraction assembly **316** and an oleo strut/support frame **315** connecting the wheel/truck assembly **312** to the retraction assembly **316.** Wheel/truck assembly **312** may have a plurality of wheels **314,** for example and without limitation, 2-6 wheels. Retraction assembly **316** is attached to wheel truck assembly **312** and to aircraft body **304.**

Retraction assembly **316** includes a number of components including a pivoting trunnion brace **320,** and a forward and aft trunnion **322.** The retraction assembly **316** may include a trunnion pivot **324,** at least one main retract actuator **326,** a set of truss members **328** and **330,** a drag brace **332,** a side brace **334,** and a pair of lock links **336** and **338.** The various components of retraction assembly **316** function together to move wheel/ truck assembly **314** and landing gear **300** as a whole between the deployed position and the retracted position. When in the stowed position, landing gear assembly **300** may be stored in landing gear storage area **310** within aircraft body **304,** either fully within fuselage **306** or, in some cases, within fuselage **306** as expanded somewhat by fairing **308.**

The retraction assembly **316** may include a four bar linkage with the oleo strut/support frame **315** and the aircraft body **304** forming a second bar and a first bar respectively. The retraction assembly **316** may further include the pivoting trunnion brace **320** as a third bar of the four bar linkage, and the drag brace **332** or the side brace **334** comprising a fourth bar of the four bar linkage. The retraction assembly **316** may also include a pair of folding lock links **328** and **330** for stabilizing the four bar linkage.

As also illustrated in **Figure 3****,** fuselage structure, generally designated by reference number **350,** may be provided to releasably secure landing gear **300** within storage area **310,** and backup structure, generally designated by reference number **360,** may be provided to attach the landing gear **300** to the aircraft body **304.**

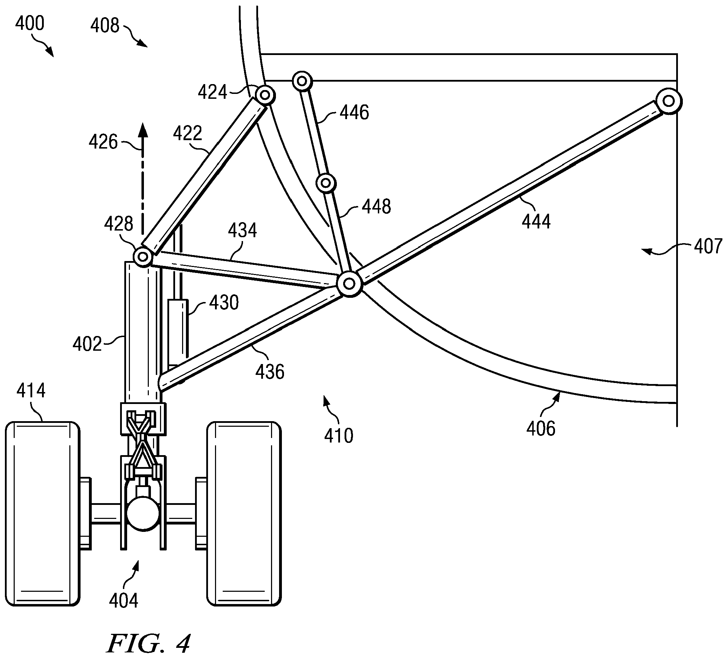

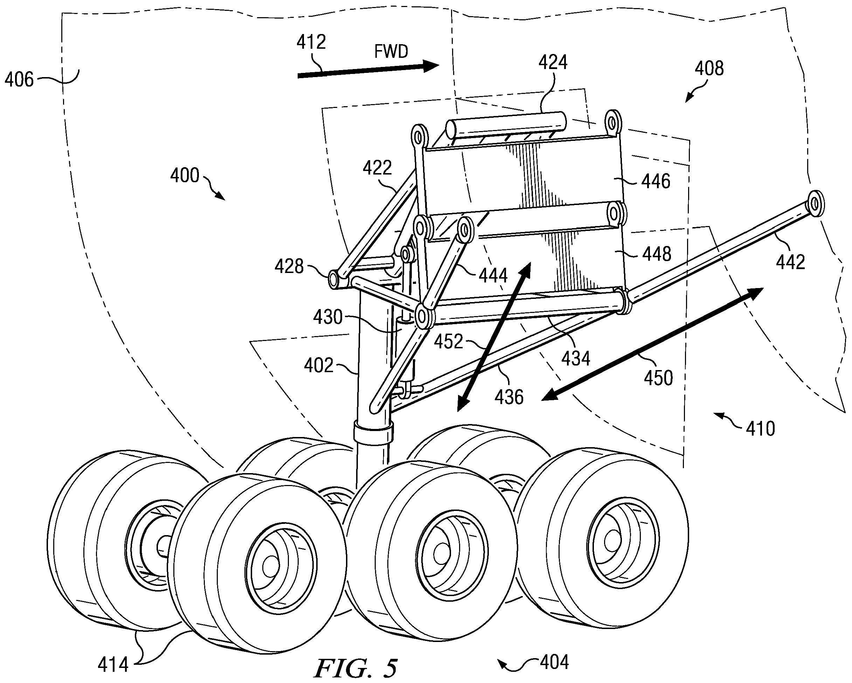

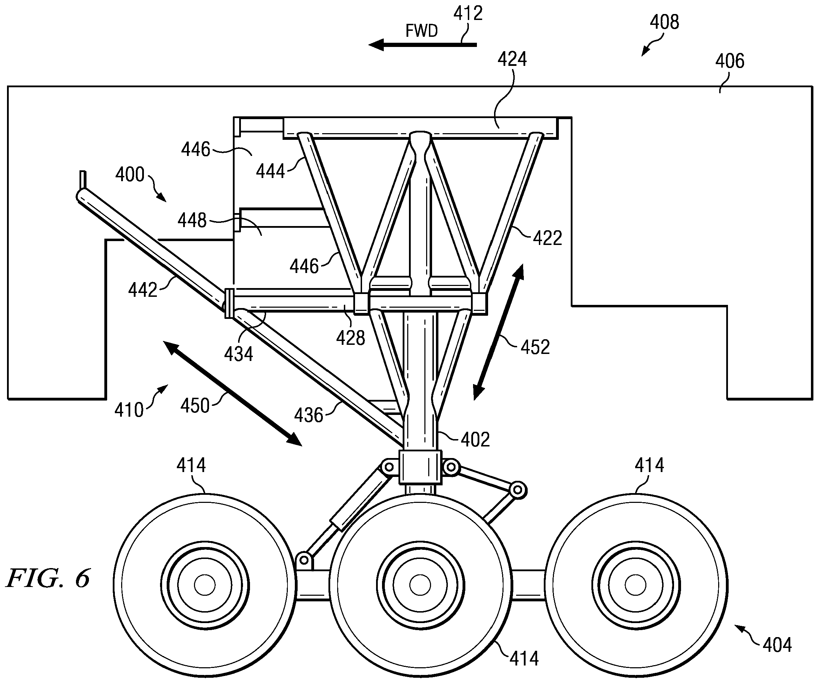

Referring now to **Figures 4-6****,** illustrations of a landing gear for an aircraft are depicted in accordance with an advantageous embodiment. In particular, **Figure 4** is an illustration of a rear plan view of a landing gear for an aircraft in accordance with an advantageous embodiment, **Figure 5** is an illustration of a side plan view of the landing gear of **Figure 4** looking outwardly
from the aircraft, and **Figure 6** is an illustration of a side plan view of the landing gear of **Figure 4** looking inwardly toward the aircraft.

The landing gear is generally designated by reference number **400,** and may be implemented as landing gear **300** in **Figure 3****.** Landing gear **400** is a fuselage mounted landing gear (FMLG), and includes an oleo strut/frame support **402** for supporting a wheel/truck assembly **404,** and a retraction assembly, generally designated by reference number **410,** for moving the oleo strut/frame support **402** and the wheel/truck assembly **404** between a deployed position for use and a retracted position for storage in landing gear storage area **407** in fuselage **406** of the aircraft **408.** **Figures 4-6** illustrate landing gear **400** in a deployed position for use. Arrows **412** in **Figures 5** and **6** illustrate the direction of the front of aircraft **408.**

Wheel/truck assembly **404** may include a plurality of wheels **414.** In the advantageous embodiment illustrated in **Figures 4-6****,** wheel/truck assembly **404** has six wheels **414.** This is intended to be exemplary only as wheel truck assembly **404** may have a different number of wheels, for example, two wheels or four wheels.

A wheel/truck assembly of an aircraft should be placed sufficiently outboard of the side of the body of the aircraft so that the aircraft will not tip over during ground maneuvering, and will remain stable throughout all aircraft operations. On an aircraft where it is not practical to use wing mounted landing gear, the landing gear is usually mounted to and completely stored within the body of the aircraft (as will be explained hereinafter, the body of the aircraft may include fuselage **406** alone or fuselage **406** as expanded by a fairing). Retraction assembly **410** illustrated in **Figures 4-6** enables wheel/truck assembly **404** to be moved between a deployed position that is sufficiently outboard of fuselage **406** to meet all tip-over requirements and, at the same time, enables complete or substantially complete storage of the landing gear **400** within fuselage **406** when the landing gear **400** is in the retracted position.

Retraction assembly **410** includes a pivoting trunnion brace **422** which may be positioned at an angle to the vertical when the landing gear is in the deployed position shown in **Figures 4-6****.** The upper end of pivoting trunnion brace **422** is attached to fuselage **406** by forward and aft trunnion **424** separated from one another enough to handle the torsional loads about vertical axis **426** (illustrated in **Figure 4**) of the landing gear **400.** The lower end of pivoting trunnion brace **422** is attached to oleo strut/frame support **402,** preferably by trunnion pivot **428.**

A main retract actuator **430** connects two pivot points on pivoting trunnion brace **422** and on oleo strut/support frame **402,** and controls the angle between the pivoting trunnion brace **422** and the oleo strut/support frame **402.** Oleo strut/support frame **402** is also supported by a set of
truss members **434** and **436.** Truss members **434** and **436** are supported by a drag brace **442** and a side brace **444** which are held on-center via a pair of folding lock links **446** and **448.**

When landing gear **400** is deployed, as shown in **Figures 4-6****,** it is far enough outboard of the side of fuselage **406** to ensure stability during taxi and landing. Landing gear **400** also provides stable 3-dimensional support which effectively resists loads and moments from any direction. The drag brace **442** forms a straight drag load path from the oleo strut/support frame **402** to the fuselage **406** as shown by arrow **450** in **Figures 5** and **6****,** and the side brace **444** forms a straight side load path from the oleo strut/support frame **402** to the fuselage **406** as shown by arrow **452** in **Figures 5** and **6****.**

When landing gear **400** is retracted by operation of retract actuator **430,** landing gear **400** is retracted well within fuselage **406** when the lock links **446** and **448** are unlocked. The size and weight of landing gear **400** is minimized by limiting variation in the mechanical advantage of the retract actuator.

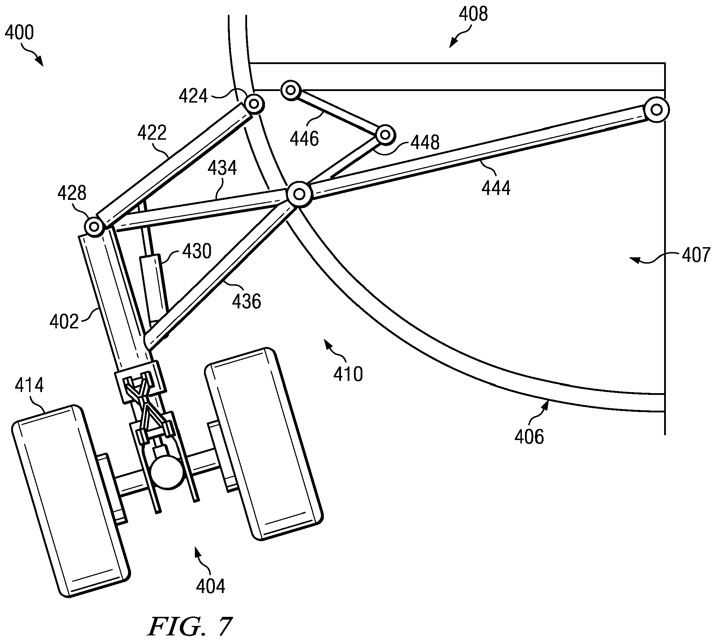

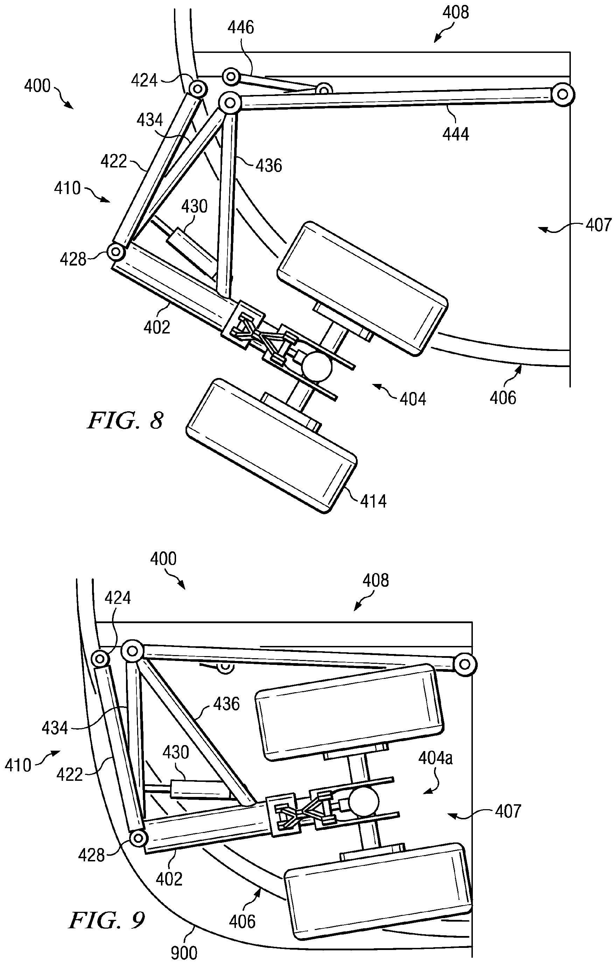

Referring now to **Figures 7-9****,** illustrations of the landing gear of **Figures 4-6** are depicted during retraction and when fully retracted in accordance with an advantageous embodiment. In particular, **Figures 7** and **8** are illustrations depicting a rear plan view of the landing gear of **Figures 4-6** in first and second stages, respectively, of being retracted in accordance with an advantageous embodiment, and **Figure** 9 is an illustration depicting a rear plan view of the landing gear of **Figures 4-6** in a fully retracted position in accordance with an advantageous embodiment.

During the retraction process, as shown in **Figures 7** and **8****,** lock links **446** and **448** unlock via a lock actuator (not shown) allowing the main retract actuator **430** to retract causing the oleo strut/support frame **402** to rotate relative to the aircraft body **406** until the wheel/ truck assembly **404** and the oleo strut/support frame **402** are fully stowed and almost entirely within the fuselage **406** where a separate uplock mechanism (not shown) holds the landing gear in the up and locked position, as shown in **Figure 9****.** Although not illustrated in the figures, a rotary actuator may be provided, if desired, to assist in placing the landing gear in a fully stowed position.

As also shown in **Figure 9****,** a fairing **900** may be provided to encompass the retracted landing gear, when necessary. In accordance with an advantageous embodiment, however, the fairing **900** may be much closer to fuselage **406** as compared to current fuselage mounted landing gear. Fairing **900** provides enough clearance for landing gear **400** and the retracted and spun and grown tire envelope **404a** shown in **Figure 9****,** which represents the increased volume occupied by rotating thermally expanded tires.

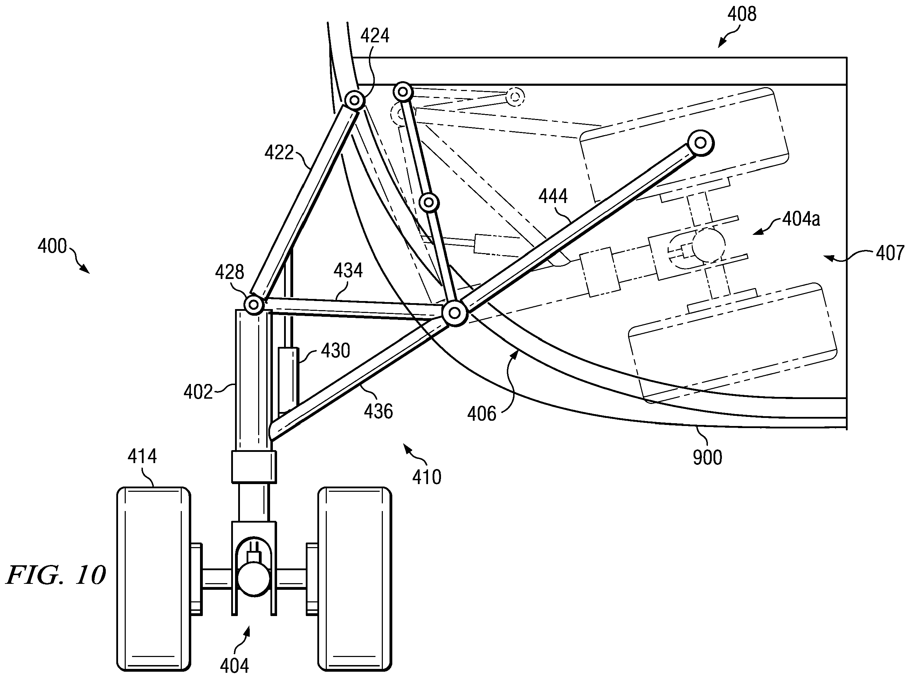

With reference now to **Figure 10****,** an illustration of a rear plan view of the landing gear of **Figures 4-6** is depicted in accordance with a further advantageous embodiment In particular, for some aircraft for example, wider body aircraft, landing gear **400** may be stowed entirely inside the fuselage **406** without a fairing being required. **Figure 10** illustrates landing gear **400** much more fully stowed within the outline of a wider fuselage **406** such that fairing **900** illustrated in **Figure 9** is reduced significantly and may be unnecessary.

The reduction or complete elimination of landing gear fairing **900** may cause a significant reduction in fuselage parasite drag. This drag reduction may, for example and without limitation, be about 2 percent with a corresponding reduction in fuel burn.

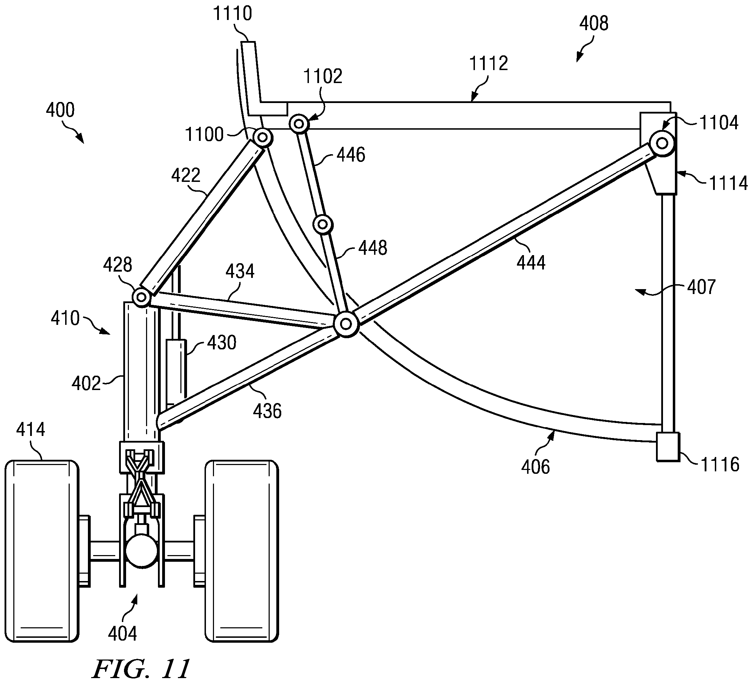

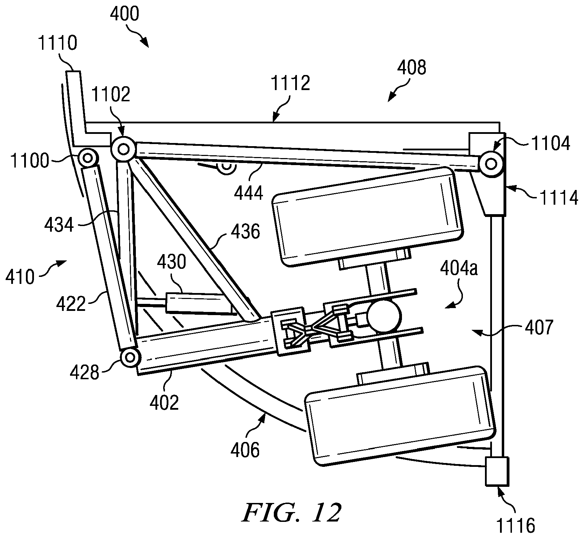

**Figures 11** and **12** are illustrations that depict details of the landing gear backup structure of **Figure 4** in accordance with an advantageous embodiment. **Figure 11** illustrates landing gear **400** in a deployed position, and **Figure 12** illustrates landing gear **400** in a retracted position.

Landing gear **400** may require the installation of up to six pivot points onto fuselage **406.** Reference number **1100** refers to the forward and aft trunnion axis points for pivoting trunnion brace **422.** Reference number **1102** is a pivot axis for upper locking link **446,** and reference number **1104** is a pivot axis point for drag brace **442** and for side brace **444.** As shown in **Figures 11** and **12****,** the configuration of landing gear **400** has a flexibility that allows points **1100, 1102** and **1104** to be located at almost any necessary location relative to the cross-section of fuselage **406.**

As also shown in **Figures 11** and **12****,** pivot lugs for pivots **1100** and **1102** may be installed on the longeron **1110,** which is attached to an adequate amount of fuselage **406** frames and floor beams (not shown). Longeron **1110** plays a role of a loads trap structural element. Pivot **1102** can also be attached to the reinforced floor beam **1112.** Pivots **1104** will be located on the reinforced upper area of a centerline bulkhead **1114.** Together, with a keel beam **1116** and the floor structure **1112,** this area can be designed strong enough to carry all operation load from the landing gear **400** to the fuselage **406.**

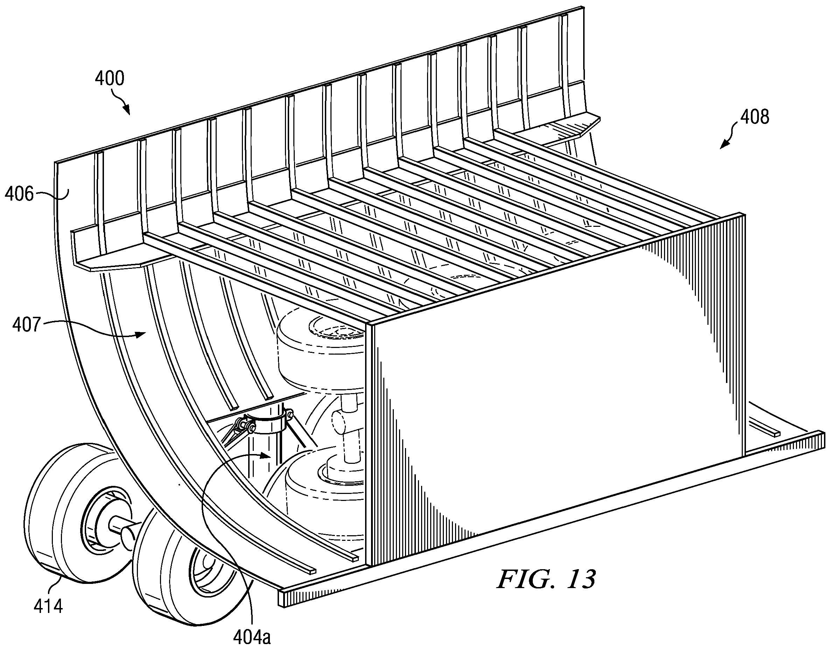

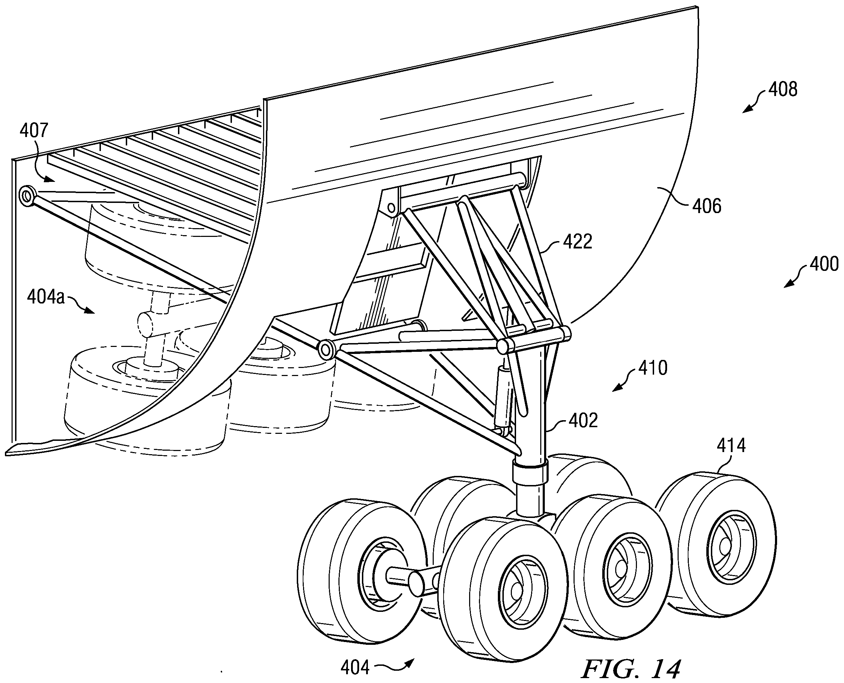

**Figures 13** and **14** are illustrations that depict isometric views of the landing gear **of** **Figures 4-6** integrated into a fuselage structure of an aircraft in accordance with an advantageous embodiment. In particular, **Figure 13** is an illustration of an isometric view of landing gear **400** integrated into a fuselage structure of an aircraft looking outwardly from the aircraft, and **Figure 14** is an illustration of an isometric view of landing gear **400** integrated into a fuselage structure of the aircraft looking inwardly toward the aircraft. Stringers, floor and wheel well aft and forward pressure bulkheads are not shown in **Figures 13** and **14** for clarity. The skin of fuselage **406** is shown as semi-transparent, also for clarity.

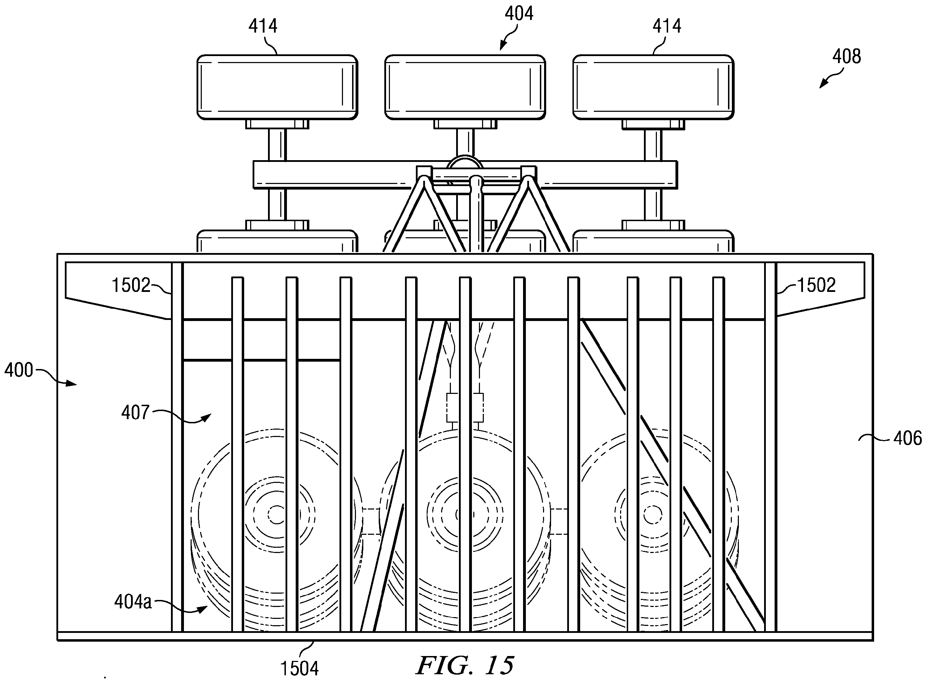

**Figure 15** is an illustration of a top plan view of the landing gear of **Figures 4-6****,** showing the landing gear in both deployed and retracted positions in accordance with an advantageous embodiment. **Figure 15** illustrates that for a landing gear such as landing gear **400,** having a three-axle wheel/truck assembly, the size for the landing gear storage area **407** is determined primarily by the wheel/ truck assembly **404** expanded as shown at **404a.** The entire landing gear and the backup structure (the fixed structure to which the landing gear is attached) is completely contained within the forward and aft wheel well pressure bulkheads **1502,** the keel beam **1504** and, if necessary, the fairing **900** (not shown in **Figure 15****).**

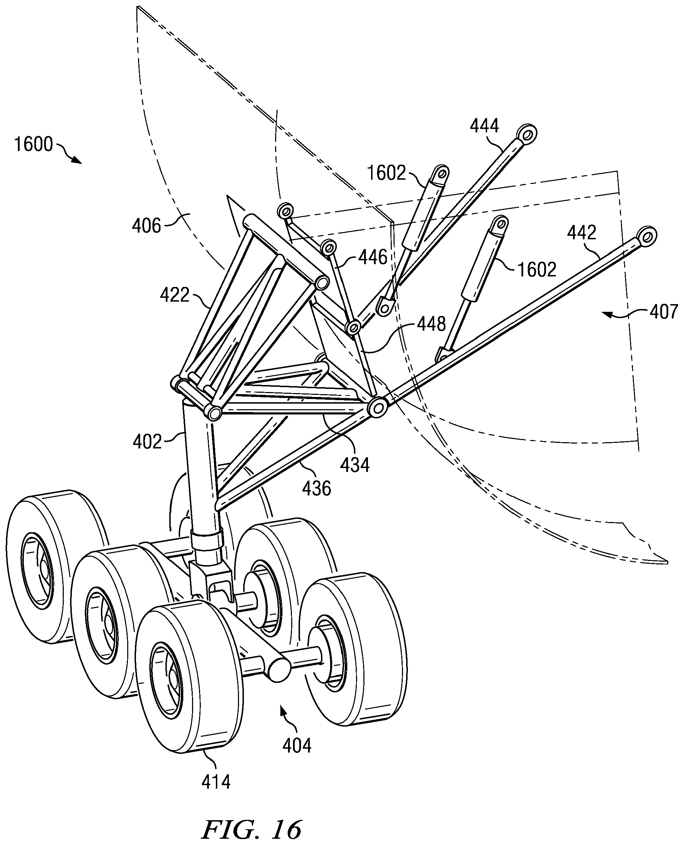

With reference now to **Figure 16****,** an illustration of a rear perspective view of a landing gear for an aircraft in accordance with a further advantageous embodiment is depicted. The landing gear is designated by reference number **1600,** and differs from landing gear **400** in **Figures 4-6** in that the main retract actuators **1602** are attached to fuselage **406** and to some point on drag brace **442** and the side brace **444** relative to the fuselage **406** retracting the landing gear well within the fuselage **406** when the lock links **446** and **448** are unlocked.

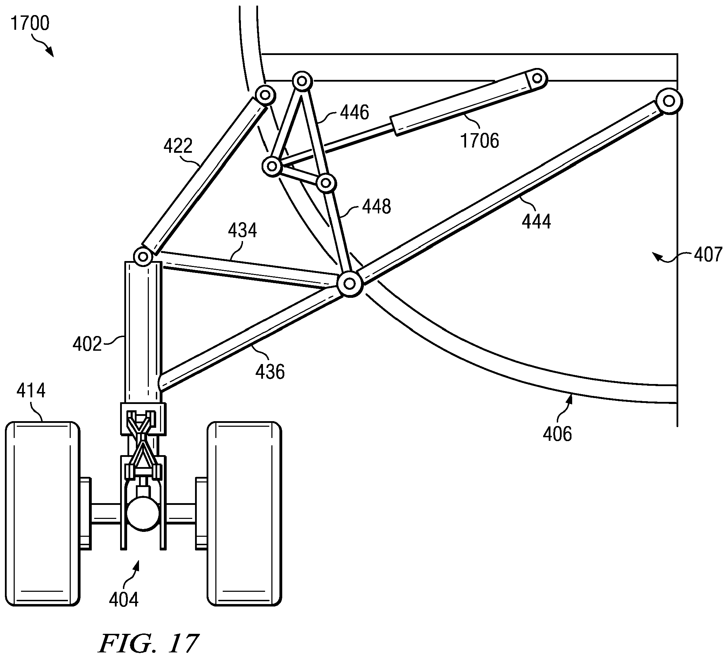

With reference now to **Figure 17****,** an illustration of a rear plan view of a landing gear for an aircraft in accordance with a further advantageous embodiment is depicted. Landing gear **1700** in **Figure 17** differs from landing gear **1600** in **Figure 16** in that main retract actuator **1706** directly rotates the upper lock link **446,** which, in turn, rotates the lower lock link **448,** which, in turn, retracts the landing gear **1700** well within the fuselage **406.** In this advantageous embodiment, the upper pivot of main retract actuator **1706** is attached to structure of fuselage **406,** and the lower pivot of the main retract actuator **1706** is attached to the upper lock link **446** offset outboard from the lock link.

In general, in all embodiments of landing gear described herein, the retract actuators and the upper and lower lock links can be designed either as independent forward and aft members, or as single piece parts where forward and aft members will be webbed or framed together. Also, for the retract actuators and the upper and lower lock links, the forward and aft members can be designed to be either symmetric or non-symmetric. The locking actuator, springs and other mechanisms for any of the lock link embodiments can be designed in many ways.

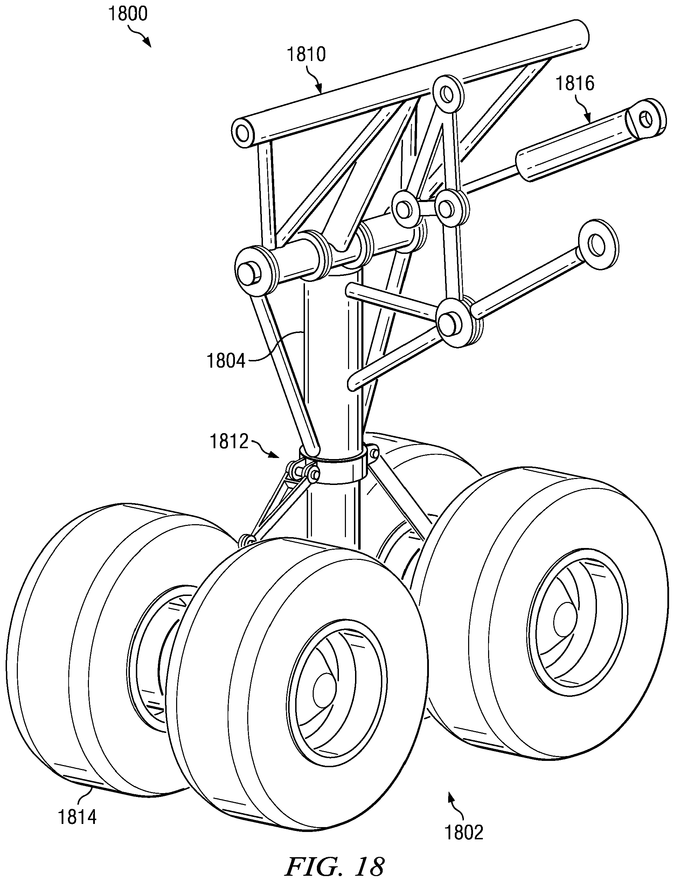

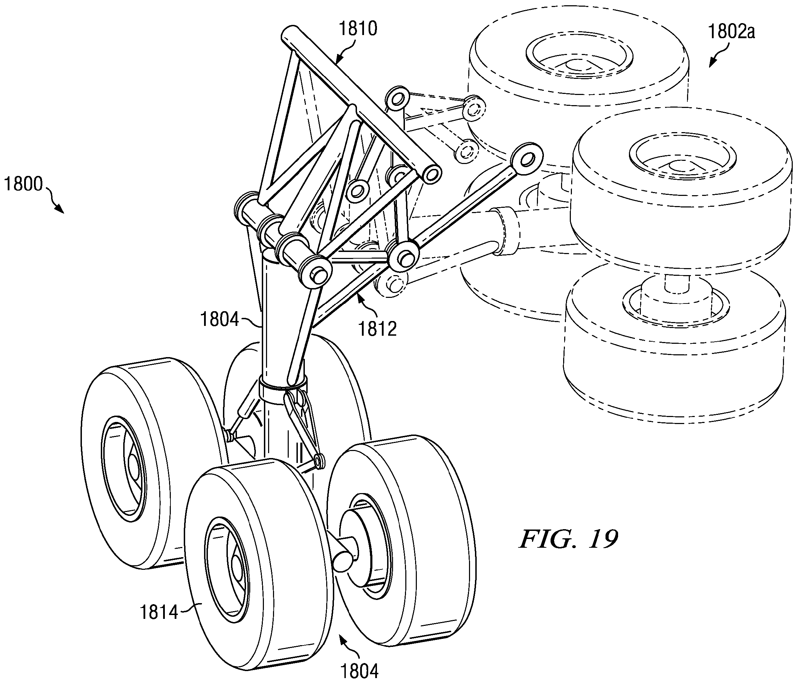

**Figures 18** and **19** are illustrations depicting a two axle truck landing gear for an aircraft in accordance with a further advantageous embodiment. In particular, **Figure 18** is an illustration of a rear perspective view of a landing gear for an aircraft in a deployed position looking inwardly from the aircraft, and **Figure 19** is an illustration of a rear perspective view of the landing gear of **Figure 18** looking outwardly from the aircraft in both deployed and retracted positions.

**Figures 18** and **19** specifically illustrate a landing gear **1800** for a truck assembly **1802** having four wheels **1814.** In landing gear **1800,** oleo strut/frame support **1804** is supported by a wide truss-type pivot beam **1810** to react to longitudinal loads. The yoked truss members in landing gear **400** in **Figures 4-6** become a simple single set of truss members as shown at **1812.** The entire retraction mechanism with a single actuator **1816** is aligned with the plane of the truss members **1812.** A single axle, two axle or three axle truck landing gear support structure and actuation scheme can also be designed as shown in **Figures 4-6** or as shown in **Figure 16****.**

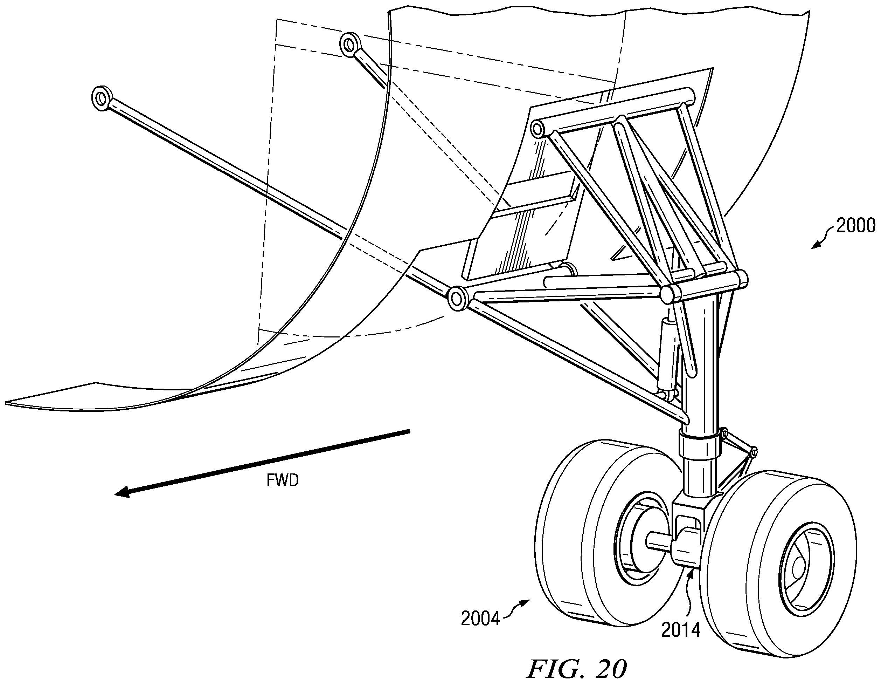

**Figure 20** is an illustration of a side perspective view of a landing gear for an aircraft in accordance with a further advantageous embodiment. In particular, **Figure 20** illustrates a landing gear **2000** for a truck assembly **2002** having one axle **2014.** In landing gear **2000,** the wheel axle can be shifted (i.e., positioned longitudinally on the ground to balance the aircraft) by making the oleo strut/support frame **2004** asymmetric in a longitudinal direction in order to optimize a center of gravity envelope for the aircraft design. In general, the landing gear for the single axle truck assembly does not differ from a landing gear for a four wheel or a six wheel truck assembly.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A landing gear for an aircraft, comprising:
a wheel/truck assembly (404);
an oleo strut/support frame (402) for supporting the wheel/truck assembly (404); and
a retraction assembly (410) attached to the oleo strut/support frame (402), the retraction assembly (410) for moving the landing gear between a deployed position and a retracted position, the retraction assembly (410) including a pivoting trunnion brace (422) attached to the oleo strut/support frame (402) and to a fuselage of the aircraft for positioning the wheel/truck assembly (404), the oleo strut/support frame (402) and the retraction assembly (410) at least substantially fully within the fuselage of the aircraft in the retracted position,
wherein the pivoting trunnion brace (422) comprises an upper end and a lower end, the lower end attached to the oleo strut/support frame (402) and the upper end attached to the fuselage by a forward and aft trunnion (424) separated from one another enough to handle the torsional loads about vertical axis (426) of the landing gear, wherein the pivoting trunnion brace (422) pivots about the forward and aft trunnion (424) during movement between the deployed position and the retracted positon;
wherein the retraction assembly (410) comprises a retract actuator (430) connected to the pivoting trunnion brace (422) for moving the landing gear from the deployed position to the retracted position
and wherein the retract actuator (430) connects pivot points on the pivoting trunnion brace (422) and on the oleo strut/support frame (402).

2. The landing gear in claim 1, wherein the retraction assembly (410) comprises a drag brace (442) for forming a straight drag load path from the oleo strut/support frame (402) to the fuselage, and a side brace (444) for forming a straight side load path from the oleo strut/support frame (402) to the fuselage.

3. The landing gear in any of claims 1-2, wherein the retraction assembly (410) further comprises a pair of side braces (446, 448).

4. The landing gear in any of claims 1-3, wherein the wheel/truck assembly (404) comprises one of a one axle, a two axle or a three axle wheel/truck assembly (404).

5. A method for retracting a wheel truck assembly of an aircraft from a deployed position to a retracted position, comprising:
providing a linkage between an oleo strut/support frame (402) that supports the wheel truck assembly, and a fuselage of the aircraft;
stabilizing the linkage with a pair of side braces (446, 448) when the wheel truck assembly is in the deployed position;
unlocking the pair of side braces (446, 448) to release the linkage; and
operating a retract actuator (430) to rotate the oleo strut/support frame (402) relative to the fuselage until the wheel truck assembly is at least substantially fully within the fuselage of the aircraft in the retracted position, wherein the linkage comprises a pivoting trunnion brace (422) attached to the oleo strut/support frame (402) and to the fuselage and
wherein the retract actuator (430) connects pivot points on the pivoting trunnion brace (422) and on the oleo strut/support frame (402);
wherein the pivoting trunnion brace (422) comprises an upper end and a lower end, the lower end attached to the oleo strut/support frame (402) and the upper end attached to the fuselage by a forward and aft trunnion (424) separated from one another enough to handle the torsional loads about vertical axis (426) of the landing gear, wherein the pivoting trunnion brace (422) pivots about the forward and aft trunnion (424) during retraction between the deployed position and the retracted positon.

6. The method of claim 5, wherein unlocking the pair of side braces (446, 448) comprises operating a lock actuator to unlock the pair of side braces (446, 448).

7. The method of claims 5 and 6, wherein the linkage further comprises a drag brace (442) for forming a straight drag load path from the oleo strut/support frame (402) to the fuselage, and a side brace (444) for forming a straight side load path from the oleo strut/support frame (402) to the fuselage.

## Patentansprüche

1. Fahrwerk für ein Flugzeug, umfassend:
eine Rad-Fahrgestell-Baugruppe (404);
einen Stoßdämpfer-/Trägerrahmen (402) zum Tragen der Rad-Fahrgestell-Baugruppe (404); und
eine Einziehbaugruppe (410), die an dem Stoßdämpfer-/ Trägerrahmen (402) befestigt ist, wobei die Einziehbaugruppe (410) zum Bewegen des Fahrwerks zwischen einer ausgefahrenen Position und einer eingefahrenen Position dient, wobei die Einziehbaugruppe (410) eine schwenkende Schwenkstrebe (422) aufweist, die am Stoßdämpfer-/Trägerrahmen (402) und an einem Rumpf des Flugzeugs befestigt ist, um die Rad-Fahrgestell-Baugruppe (404), den Stoßdämpfer-/Trägerrahmen (402) und die Einziehbaugruppe (410) in der eingefahrenen Position zumindest im Wesentlichen vollständig innerhalb des Rumpfes des Flugzeugs zu positionieren,
wobei die schwenkende Schwenkstrebe (422) ein oberes Ende und ein unteres Ende umfasst, wobei das untere Ende am Stoßdämpfer-/Trägerrahmen (402) und das obere Ende am Rumpf durch einen vorderen und hinteren Schwenkzapfen (424) befestigt ist, die so weit voneinander getrennt sind, dass sie die Torsionslasten um die vertikale Achse (426) des Fahrwerks aufnehmen können, wobei die schwenkende Schwenkstrebe (422) während der Bewegung zwischen der ausgefahrenen Position und der eingefahrenen Position um den vorderen und den hinteren Schwenkzapfen (424) schwenkt;
wobei die Einziehbaugruppe (410) ein Einziehstellglied (430) umfasst, das mit der schwenkenden Schwenkstrebe (422) verbunden ist, um das Fahrwerk aus der ausgefahrenen Position in die eingefahrene Position zu bewegen;
und wobei das Einziehstellglied (430) Drehpunkte an der schwenkenden Schwenkstrebe (422) und am Stoßdämpfer-/Trägerrahmen (402) verbindet.

2. Fahrwerk nach Anspruch 1, bei dem die Einziehbaugruppe (410) eine Zugstrebe (442) zum Bilden eines geraden Zugkraftweges vom Stoßdämpfer-/Trägerrahmen (402) zum Rumpf und eine Seitenstrebe (444) zum Bilden eines geraden Seitenkraftweges vom Stoßdämpfer-/Trägerrahmen (402) zum Rumpf umfasst.

3. Fahrwerk nach einem der Ansprüche 1-2, bei dem die Einziehbaugruppe (410) ferner ein Paar Seitenstreben (446, 448) umfasst.

4. Fahrwerk nach einem der Ansprüche 1-3, wobei die Rad-Fahrgestell-Baugruppe (404) eine einachsige, eine zweiachsige oder eine dreiachsige Rad-Fahrgestell-Baugruppe (404) umfasst.

5. Verfahren zum Einziehen einer Rad-Fahrgestell-Baugruppe eines Flugzeugs aus einer ausgefahrenen Position in eine eingefahrene Position, mit den Schritten:
Bereitstellen einer Verbindung zwischen einem Stoßdämpfer-/Trägerrahmen (402), der die Rad-Fahrgestell-Baugruppe trägt, und einem Rumpf des Flugzeugs;
Stabilisieren der Verbindung mit einem Paar Seitenstreben (446, 448), wenn sich die Rad-Fahrgestell-Baugruppe in der ausgefahrenen Position befindet;
Entriegeln des Paares von Seitenstreben (446, 448), um die Verbindung freizugeben; und
Betreiben eines Einziehstellglieds (430), um den Stoßdämpfer-/Trägerrahmen (402) relativ zum Rumpf zu drehen, bis sich die Rad-Fahrgestell-Baugruppe in der eingefahrenen Position zumindest im Wesentlichen vollständig im Rumpf des Flugzeugs befindet, wobei die Verbindung eine schwenkende Schwenkstrebe (422) umfasst, die am Stoßdämpfer-/Trägerrahmen (402) und am Rumpf befestigt ist, und wobei das Einziehstellglied (430) Drehpunkte an der schwenkenden Schwenkstrebe (422) und am Stoßdämpfer-/Trägerrahmen (402) verbindet;
wobei die schwenkende Schwenkstrebe (422) ein oberes Ende und ein unteres Ende umfasst, wobei das untere Ende am Stoßdämpfer-/Trägerrahmen (402) und das obere Ende am Rumpf durch einen vorderen und hinteren Schwenkzapfen (424) befestigt sind, die so weit voneinander getrennt sind, dass sie die Torsionslasten um die vertikale Achse (426) des Fahrwerks aufnehmen können, wobei die schwenkbare Schwenkstrebe (422) während des Einziehens um den vorderen und hinteren Schwenkzapfen (424) zwischen der ausgefahrenen Position und der eingefahrenen Position schwenkt.

6. Verfahren nach Anspruch 5, bei dem das Entriegeln des Paares von Seitenstreben (446, 448) das Betätigen eines Verriegelungsaktuators zum Entriegeln des Paares von Seitenstreben (446, 448) umfasst.

7. Verfahren nach den Ansprüchen 5 und 6, bei dem die Verbindung ferner eine Zugstrebe (442) zum Bilden eines geraden Zugkraftweges vom Stoßdämpfer-/Trägerrahmen (402) zum Rumpf und eine Seitenstrebe (444) zum Bilden eines geraden Seitenkraftweges vom Stoßdämpfer-/Trägerrahmen (402) zum Rumpf umfasst.

## Revendications

1. Train d'atterrissage pour un aéronef, comprenant :
un ensemble roues/bogie (404) ;
une jambe oléo/armature porteuse (402) servant à supporter l'ensemble roues/bogie (404) ; et
un ensemble de rétraction (410) attaché à la jambe oléo/armature porteuse (402), l'ensemble de rétraction (410) servant à déplacer le train d'atterrissage entre une position déployée et une position rétractée, l'ensemble de rétraction (410) comprenant une contre-fiche à tourillon pivotant (422) rattaché à la jambe oléo/armature porteuse (402) et à un fuselage de l'aéronef afin de positionner l'ensemble roues/bogie (404), la jambe oléo/armature porteuse (402) et l'ensemble de rétraction (410) au moins sensiblement entièrement à l'intérieur du fuselage de l'aéronef dans la position rétractée,
dans lequel la contrefiche à tourillon pivotant (422) comprend une extrémité supérieure et une extrémité inférieure, l'extrémité inférieure étant attachée à la jambe oléo/armature porteuse (402) et l'extrémité supérieure étant attachée au fuselage par des tourillons avant et arrière (424) suffisamment séparés l'un de l'autre pour prendre en charge les charges de torsion autour d'un axe vertical (426) du train d'atterrissage, dans lequel la contrefiche à tourillon pivotant (422) pivote autour des tourillons avant et arrière (424) pendant le mouvement entre la position déployée et la position rétractée ;
dans lequel l'ensemble de rétraction (410) comprend un actionneur de rétraction (430) relié à la contrefiche à tourillon pivotant (422) pour déplacer le train d'atterrissage de la position déployée à la position rétractée
et dans lequel l'actionneur de rétraction (430) relie des points de pivotement sur la contrefiche à tourillon pivotant (422) et sur la jambe oléo/armature porteuse (402).

2. Train d'atterrissage selon la revendication 1, dans lequel l'ensemble de rétraction (410) comprend une contrefiche de trainée (442) destinée à former un trajet de charge de traînée rectiligne de la jambe oléo/armature porteuse (402) au fuselage, et une contrefiche latérale (444) pour former un trajet de charge latéral rectiligne entre la jambe oléo/armature porteuse (402) et le fuselage.

3. Train d'atterrissage selon l'une quelconque des revendications 1 et 2, dans lequel l'ensemble de rétraction (410) comprend en outre une paire de contrefiches latérales (446, 448).

4. Train d'atterrissage selon l'une quelconque des revendications 1 à 3, dans lequel l'ensemble roues/bogie (404) comprend l'un d'un ensemble roues/bogie à un essieu, à deux essieux ou à trois essieux (404).

5. Procédé de rétraction d'un ensemble roues/bogie d'aéronef d'une position déployée à une position rétractée, comprenant les étapes consistant à :
fournir une liaison entre une jambe oléo/armature porteuse (402) qui supporte l'ensemble roues/bogie et un fuselage de l'aéronef ;
stabiliser la liaison avec une paire de contrefiches latérales (446, 448) lorsque l'ensemble roues/bogie est dans la position déployée ;
déverrouiller la paire de contrefiches latérales (446, 448) pour libérer la liaison ; et
actionner un actionneur de rétraction (430) pour faire tourner la jambe oléo/armature porteuse (402) par rapport au fuselage jusqu'à ce que l'ensemble roues/bogie soit au moins sensiblement complètement à l'intérieur du fuselage de l'aéronef dans la position rétractée, dans lequel la liaison comprend une contrefiche à tourillon pivotant (422) attachée à la jambe oléo/armature porteuse (402) et au fuselage, et
dans lequel l'actionneur de rétraction (430) relie des points de pivotement sur la contrefiche à tourillon pivotant (422) et sur la jambe oléo/armature porteuse (402) ;
dans lequel la contrefiche à tourillon pivotant (422) comprend une extrémité supérieure et une extrémité inférieure, l'extrémité inférieure attachée à la jambe oléo/armature porteuse (402) et l'extrémité supérieure attachée au fuselage par des tourillons avant et arrière (424) suffisamment séparés l'un de l'autre pour prendre en charge les charges de torsion autour de l'axe vertical (426) du train d'atterrissage, dans lequel la contrefiche à tourillon pivotant (422) pivote autour des tourillons avant et arrière (424) pendant une rétraction entre la position déployée et la position rétractée.

6. Procédé selon la revendication 5, dans lequel le déverrouillage de la paire de contrefiches latérales (446, 448) comprend l'actionnement d'un actionneur de verrouillage pour déverrouiller la paire de contrefiches latérales (446, 448).

7. Procédé selon les revendications 5 et 6, dans lequel la liaison comprend en outre une contrefiche de traînée (442) destinée à former un trajet de charge de traînée rectiligne depuis la jambe oléo/armature porteuse (402) jusqu'au fuselage, et une contrefiche latérale (444) pour former un trajet de charge latéral droit entre la jambe oléo/armature porteuse (402) et le fuselage.
